# EUROPÄISCHE PATENTSCHRIFT

(11) **EP 1 716 754 B1**
(45) Veröffentlichungstag und Bekanntmachung des Hinweises auf die Patenterteilung: **08.03.2017**
(21) Anmeldenummer: 06006467.2
(22) Anmeldetag: 29.03.2006
(51) Int. Cl.: A01M 7/00, A01B 69/00

(54) **Landwirtschaftliche Verteilmaschine**
Agricultural distributor
Epandeur agricole

(30) Priorität: 26.04.2005 DE 102005019238
(43) Veröffentlichungstag der Anmeldung: 02.11.2006
(73) Patentinhaber: Amazonen-Werke H. Dreyer GmbH & Co. KG, 49205 Hasbergen (DE)
(72) Erfinder: Ehlen, Volker, 49205 Hasbergen (DE); Wiemeyer, Benno, 49504 Lotte-Halen (DE)

(56) Entgegenhaltungen:
- EP-A- 1 444 879
- DE-A1- 10 054 285
- US-A- 4 607 716
- US-A- 5 031 704
- US-A- 6 053 419

## Beschreibung

Die Erfindung betrifft eine landwirtschaftliche Verteilmaschine gemäß des Oberbegriffs des Patentanspruchs 1.

Derartige Verteilmaschinen sind beispielsweise durch die DE 100 54 285 A1 bekannt. Diese landwirtschaftliche Verteilmaschine ist als Feldspritze ausgebildet und weist ein an einem Rahmen angeordnetes Verteilergestänge auf, welches unter anderem um eine aufrechte Achse in horizontaler Ebene pendelnd aufgehängt ist. Zwischen dem Verteilergestänge und dem Rahmen der Maschine ist ein motorisches Stellglied angeordnet, welches über eine elektronische Regeleinrichtung ansteuerbar ist. Hierdurch kann Schwingungen des Verteilergestänges um die aufrechte Achse aktiv entgegen gewirkt werden.

Derartige landwirtschaftliche Verteilmaschinen sind zum spurgetreuen Nachlaufen entweder mit einer Deichsellenkung oder Achsschenkellenkung ausgestattet. Hierbei besteht dann das Problem, dass beispielsweise beim Fahren quer zum Hang oder beim Durchfahren von Kurven oder beim Einleiten des Wendevorganges der Verteilmaschine am Feldende, wenn die Verteilmaschine zwar spurgetreu der Spur der Verteilmaschine ziehenden Schleppers folgt, dann jedoch das Verteilergestänge nicht mehr rechtwinklig zur Sollrichtung der Fahrspur ausgerichtet ist. Hierdurch kommt es dann zu Unter- oder Überdosierung des auszubringenden Pflanzenschutzmittels.

Der Erfindung liegt die Aufgabe zugrunde, die Ausrichtung des Verteilergestänges zur Sollrichtung der Fahrspur zu verbessern.

Diese Aufgabe wird erfindungsgemäß durch das kennzeichnende Merkmal des Patentanspruches 1 gelöst. Infolge dieser Maßnahme wird das Verteilergestänge durch das Stellglied rechtwinklig zur Sollrichtung der Fahrspur der Verteilmaschine ausgerichtet.

In einer ersten Ausführung der Erfindung ist vorgesehen, dass das Mittel als manuell betätigbarer Schalter ausgebildet ist.

Infolge dieser Maßnahme kann durch die manuelle Betätigung der Schalter in einfacher und preiswerter Weise das Stellglied zur rechtwinkligen Einstellung des Verteilergestänges zur Sollrichtung der Fahrspur angesteuert werden.

In einer weiteren Ausführung der Erfindung ist vorgesehen, dass das Mittel als Winkelsensor ausgebildet ist. Infolge dieser Maßnahme wird automatisch aufgrund der Signale des Winkelsensors das Stellglied angesteuert oder eine automatisch rechtwinklige Einstellung des Verteilergestänges zur Sollrichtung der Fahrspur erreicht wird. Um eine automatische Einstellung des Verteilergestänges rechtwinklig zur Sollrichtung der Fahrspur der Verteilmaschine einer mit einer Achsschenkellenkung ausgerüsteten Verteilmaschine zu erreichen, ist vorgesehen, dass das Mittel zur Ansteuerung des Stellgliedes der Winkelsensor ist, dass der Winkelsensor Signale an die elektronische Regeleinrichtung übermittelt.

Bei einer mit einer Deichsellenkung ausgestatteten Verteilmaschine ist zur automatischen rechtwinkligen Einstellung des Verteilergestänges zur Sollrichtung der Fahrspur der Verteilmaschine vorgesehen, dass die Verteilmaschine ein Fahrwerk und eine Zugdeichsel aufweist, dass die Zugdeichsel mittels eines eine aufrechte Achse aufweisenden Gelenkes am Rahmen angelenkt und zwischen der Zugdeichsel und dem Rahmen ein motorisches Stellorgan angeordnet ist, dass zwischen der Deichsel und des die Verteilmaschine ziehenden Schleppers zumindest ein Winkelsensor angeordnet ist, dass das Mittel zur Ansteuerung des Stellgliedes der Winkelsensor ist, dass der Winkelsensor Signale an die elektronische Regeleinrichtung übermittelt.

Die rechtwinklige Einstellung des Verteilergestänges in Sollrichtung der Fahrspur wird in einer weiteren Ausführung dadurch gewährleistet, dass in der Speichereinrichtung der elektronischen Regeleinrichtung eine Feldkarte mit der Lage der Fahrgassen hinterlegt ist, dass aufgrund eines in der Speichereinrichtung hinterlegten Programms die Regeleinrichtung die Stellglieder derart ansteuert, dass das Verteilergestänge vom Anfang der Ausbringbahn bis zum Ende der Ausbringbahn zumindest annähernd rechtwinklig zur Richtung der Fahrgasse ausgerichtet ist.

Um Schwingungen des Verteilergestänges zu minimieren, ist vorgesehen, dass das Stellglied mit einer Dämpfungsvorrichtung versehen ist.

Um während des Wendevorganges oder beim Durchfahren einer Kurve möglichst geringe Kräfte auf das Verteilergestänge zu übertragen sowie ein unvorteilhaftes Über- oder Unterschwingen des Verteilergestänges zu verhindern, ist vorgesehen, dass in der Speichereinrichtung ein Programm hinterlegt ist, mittels welchem die zwischen dem Rahmen und dem Verteilergestänge angeordneten Stellglieder und/oder Dämpfungsglieder derart angesteuert werden, dass bei Beginn einer Kurvenfahrt das Gestänge verzögert die Bewegung des Rahmens mitmacht, und dass am Ende der Kurvenfahrt das Verteilergestänge nicht abrupt abgebremst wird, sondern die Abbremsung progressiv erfolgt.

Um das Schwingungsverhalten des Verteilergestänges automatisch an die Einsatzbedingungen anzupassen, ist vorgesehen, dass das Schwingungs- und Dämpfungsverhalten in der horizontalen Ebene verändert werden kann und die entsprechende Ansteuerung "lernfähig" ist.

Um bei einer Verteilmaschine mit einer Achsschenkellenkung eine automatisch rechtwinklige Stellung des Verteilergestänges zur Sollrichtung der Fahrspur der Verteilmaschine zu erreichen, ist vorgesehen, dass Mittel vorhanden sind, die das Gestänge am Feldende die sich aus der Achsschenkellenkung ergebenen Schrägstellung des Gestänges kompensieren, zurückführen in die gerade Stellung und die Pendelung erst nach dem Abschluss der Kurvenfahrt wieder freigeben.

Um ein ruhiges Verhalten des Verteilergestänges zu erreichen ist vorgesehen, dass bei der Geradeausfahrt die horizontale Gestängebewegungen registrieren werden und diesen regeltechnischen entgegengewirkt werden.

Um einen mitreißen des Verteilergestänges beim Einleiten des Wendevorganges sowie ein Überschwingen des Verteilergestänges beim Ende des Wendevorgangs entgegen zu wirken, ist vorgesehen, dass das Dämpfungselement bei Einleitung des Wendevorganges aktiviert und nach Beendigung des Wendevorganges deaktiviert wird.

Eine einfache Ausgestaltung eines derartigen Dämpfungselementes kann dadurch erreicht werden, dass das Dämpfungselement als Bremselement ausgebildet ist. Hier kann die Bremswirkung des Bremselementes durch geeignete Mittel entsprechend einstellbar sein.

Weitere Einzelheiten der Erfindung sind den übrigen Unteransprüchen, der Beispielsbeschreibung und den Zeichnungen zu entnehmen. Hierbei zeigen
- Fig. 1: den aus Ackerschlepper und mit einer Deichsellenkung ausgestatteten Verteilmaschine bestehenden Zugverband bei der Fahrt am Hang in der Draufsicht und in Prinzipdarstellung,
- Fig. 2: den Zugverband gemäß Fig. 1 in der Draufsicht und in Prinzipdarstellung, wobei das Verteilergestänge rechtwinklig zur Sollrichtung der Fahrspur ausgerichtet ist,
- Fig. 3: den aus Zugfahrzeug und mit einer Achsschenkellenkung ausgestatteten Verteilmaschine bestehenden Zugverband bei der Fahrt am Hang,
- Fig. 4: den aus Zugfahrzeug und mit einer Achsschenkellenkung ausgerüsteten Verteilmaschine bestehenden Zugverband gemäß Fig. 3 beim Durchfahren einer Kurve oder beim Wendevorgang am Feldende in der Draufsicht und in Prinzipdarstellung,
- Fig. 5: den Zugverband gemäß Fig. 4 in der Draufsicht und in Prinzipdarstellung mit rechtwinklig zur Sollrichtung der Fahrspur ausgerichteten Verteilergestänge und
- Fig. 6: den aus Zugfahrzeug und mit einer Deichsellenkung ausgestatteten Verteilmaschine bestehenden Zugverband gemäß Fig. 1 beim Durchfahren einer Kurve oder beim Wendevorgang am Feldende in der Draufsicht und in Prinzipdarstellung.

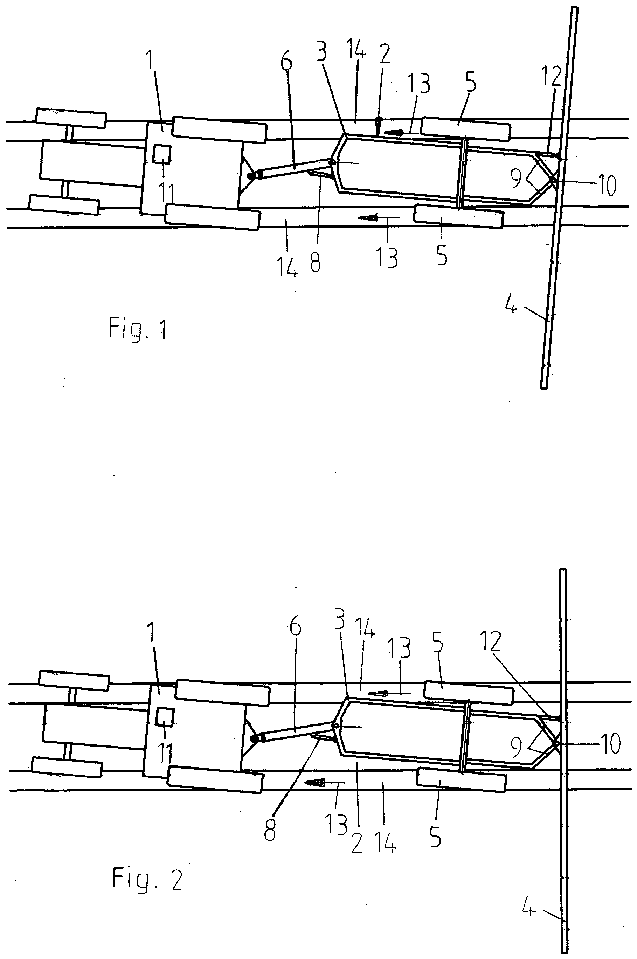

Die Fig. 1 zeigt einen aus dem als Ackerschlepper 1 ausgebildeten Zugfahrzeug und der Verteilmaschine 2 bestehenden Zugverband. Die landwirtschaftliche Verteilmaschine 2 ist als Feldspritze ausgebildet und weist einen Rahmen 3 mit einem auf der Rückseite des Rahmens 3 angeordneten Verteilergestänge 4 auf. Des weiteren weist die Verteilmaschine 2 das am Rahmen 3 angeordnete Fahrwerk mit den Laufrädern 5 auf. Auf der Vorderseite des Rahmens 3 ist die Zugdeichsel 6, die als Lenkdeichsel ausgebildet ist, angeordnet ist, welche an die Zugvorrichtung des Ackerschleppers 1 angehängt ist. Die Gelenkdeichsel 6 ist mittels des eine aufrechte Achse aufweisenden Gelenkes 7 am Rahmen 3 angelenkt. Zwischen dem Rahmen 3 und der Zugdeichsel 6 ist das als Hydraulikzylinder ausgebildetes Stellelement 8 angeordnet. Auf dem Rahmen 3 der Feldspritze 2 ist ein nicht dargestellter Vorratsbehälter zur Aufnahme des zu verteilenden Pflanzenschutzmittels angeordnet, welches über eine nicht dargestellte Pumpe Dosiervorrichtung über Leitungen den an dem Verteilergestänge 4 angeordneten und nicht dargestellten Düsen in einstellbaren Mengen zugeführt wird.

Das Verteilergestänge 4 ist auf der Rückseite des Rahmens 3 der Verteilmaschine 2 mit einer Aufhängevorrichtung 9 angeordnet. Diese Aufhängevorrichtung 9 weist zumindest ein eine aufrechte Achse aufweisendes Gelenk 10, mittels welchem das Verteilergestänge 4 in einer horizontalen Ebene bewegbar angeordnet ist. Zwischen dem Rahmen 3 und dem Verteilergestänge 4 ist das von einer elektronischen Regeleinrichtung 11 ansteuerbare motorische Stellglied 12 zum Verstellen des Verteilergestänges 4 um die aufrechte Achse angeordnet.

Wenn der Zugverband der Sollrichtung 13 der Fahrspur 14 quer zum Hang folgt, stellt der Schlepper 1 je nach Hangneigung, wie Fig. 1 zeigt, sich quer zum Hang und mit einem Winkel zur Sollrichtung 13 der Fahrspur 14 an, damit die an dem Ackerschlepper 1 angehängte Feldspritze 2 der Fahrspur 14 folgt, wird der Hydraulikzylinder 8 von einer auf dem Ackerschlepper angeordneten Betätigungseinrichtung, die vom Fahrer der Maschine bedient wird, betätigt, so dass die Zugdeichsel 6 gegenüber dem Rahmen 3 verschwenkt wird, wie Fig. 1 zeigt. Somit kann die Feldspritze 2 in lenkbarer Weise so gelenkt werden, dass die Laufräder 5 der Feldspritze 2 der Fahrspur 14 spurgetreu folgen. Hierbei stellt sich die Feldspritze 2, wie Fig. 1, zeigt in einem Winkel zur Sollrichtung 13 der Fahrspur 14 an. Hierdurch ist dann das Verteilergestänge 4 nicht mehr rechtwinklig zur Sollrichtung 13 der Fahrspur 14 ausgerichtet.

Damit das Verteilergestänge 4 bei den gemäß Fig.1 vorgeschilderten Fall wieder rechtwinklig zur Sollrichtung 13 der Fahrspur 14 ausgerichtet wird, wird das motorische Stellglied 12, welches zwischen dem Rahmen 3 und dem Verteilergestänge 4 angeordnet ist, angesteuert, so dass über motorische Stellglied 12 das Verteilergestänge 4 um die aufrechte Achse seine Aufhängung 9, wie Fig. 2 zeigt, in eine Ausrichtung rechtwinklig zur Sollrichtung 13 der Fahrspur 14 der Verteilmaschine 2 eingestellt wird. Hierbei kann die Betätigung bzw. Ansteuerung des motorischen Stellgliedes 12 über ein Bedienungselement durch Betätigung durch den Fahrer der Maschine betätigt werden, es ist jedoch auch möglich, dass ein Sensor zwischen der Lenkdeichsel 6 und dem Rahmen 3 angeordnet ist, welcher den Winkel der Zugdeichsel 6 zum Rahmen 3 bzw. zu dessen Mittellinie erfasst und bei einer Winkeländerung der Zugdeichsel 6 zum Rahmen 3 aus der Geraden entsprechende Signale an eine elektronische Regeleinrichtung 11, die beispielsweise als Bordcomputer ausgebildet sein kann, übermittelt. Aufgrund der von dem Sensor, der zwischen der Deichsel 6 und dem Rahmen 3 angeordnet ist, werden von dem Bordcomputer 11 entsprechende Stellsignale ermittelt bzw. errechnet und aufgrund dieser Daten wird dann von dem Bordcomputer 11 an das motorische Stellelement 12, welches zwischen dem Verteilergestänge 4 und dem Rahmen 3 angeordnet ist, übermittelt, so dass aufgrund dieser Signale eine entsprechende Verstellung des Verteilergestänges 4 durch das motorische Stellglied 12 erfolgt. Das Stellglied 12 kann beispielsweise als Elektromotor, Hydraulikzylinder etc. ausgebildet sein. Um eine entsprechende Verstellung vorzunehmen, ist es sinnvoll, dass zwischen dem Verteilergestänge 4 und dem Rahmen 3 einen Sensor zur Ermittlung der Stellung des Verteilergestänges 4 gegenüber der Mittellinie der Verteilmaschine 2 angeordnet ist. Dieser Sensor übermittelt dann entsprechende Signale an die elektronische Regeleinrichtung bzw. dem Bordcomputer 11.

Die Fig. 1 zeigt einen weiteren aus dem als Ackerschlepper 1 ausgebildeten Zugfahrzeug und der Verteilmaschine 15 bestehenden Zugverband. Die landwirtschaftliche Verteilmaschine 15 ist als Feldspritze ausgebildet und weist einen Rahmen 3 mit einem auf der Rückseite des Rahmens 3 angeordneten Verteilergestänge 4 auf. Des weiteren weist die Verteilmaschine 2 das am Rahmen 3 angeordnete Fahrwerk mit den Laufrädern 5 auf, deren Achsschenkel mittels eines eine aufrechte Achse aufweisenden Gelenkes 16 an dem Rahmen 3 angeordnet sind. Zwischen dem Rahmen 3 und den Achsschenkeln der Laufräder 5 sind nicht dargestellte Stellglieder der Achsschenkellenkung zum lenken der Laufräder 5 angeordnet. Weiterhin ist den lenkbaren Laufrädern 5 ein Sensor 17 zur Erfassung des Winkels zwischen den Laufrädern 5 und dem Rahmen 3 angeordnet. Auf der Vorderseite des Rahmens 3 ist die Zugdeichsel 18 angeordnet, welche an die Zugvorrichtung des Ackerschleppers 1 angehängt ist. Auf dem Rahmen 3 der Feldspritze 2 ist ein nicht dargestellter Vorratsbehälter zur Aufnahme des zu verteilenden Pflanzenschutzmittels angeordnet, welches über eine nicht dargestellte Pumpe Dosiervorrichtung über Leitungen den an dem Verteilergestänge 4 angeordneten und nicht dargestellten Düsen in einstellbaren Mengen zugeführt wird.

Das Verteilergestänge 4 ist auf der Rückseite des Rahmens 3 der Verteilmaschine 2 mit einer Aufhängevorrichtung 9 angeordnet. Diese Aufhängevorrichtung 9 weist zumindest ein eine aufrechte Achse aufweisendes Gelenk 10, mittels welchem das Verteilergestänge 4 in einer horizontalen Ebene bewegbar angeordnet ist. Zwischen dem Rahmen 3 und dem Verteilergestänge 4 ist das von einer elektronischen Regeleinrichtung 11 ansteuerbare motorische Stellglied 12 zum Verstellen des Verteilergestänges 4 um die aufrechte Achse angeordnet.

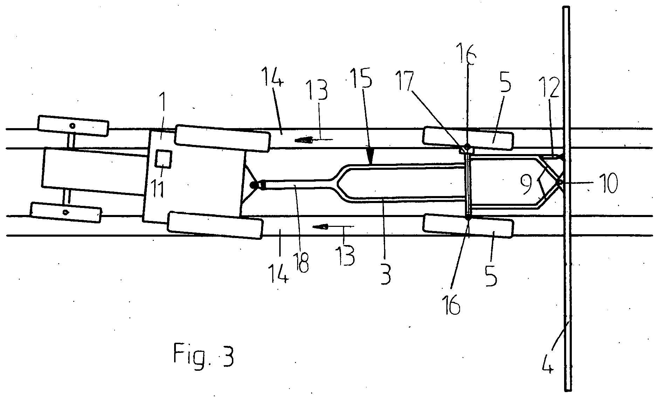

Wenn der Zugverband der Sollrichtung 13 der Fahrspur 14 quer zum Hang folgt, stellt der Schlepper 1 je nach Hangneigung, wie Fig. 3 zeigt, sich quer zum Hang und mit einem Winkel zur Sollrichtung 13 der Fahrspur 14 an, damit die an dem Ackerschlepper 1 angehängte Feldspritze 15 der Fahrspur 14 folgt, wird der nicht dargestellte Hydraulikzylinder der Achsschenkellenkung von einer auf dem Ackerschlepper angeordneten Betätigungseinrichtung, die vom Fahrer der Maschine bedient wird, betätigt, so dass die Laufräder 5 gegenüber dem Rahmen 3 um die Achsen 16 verschwenkt werden, wie Fig. 3 zeigt. Somit kann die Feldspritze 2 in lenkbarer Weise so gelenkt werden, dass die Laufräder 5 der Feldspritze 15 der Fahrspur 14 spurgetreu folgen. Hierbei bleibt die Feldspritze 15, wie Fig. 1, zeigt parallel zur Sollrichtung 13 der Fahrspur 14. Hierdurch ist dann auch das Verteilergestänge 4 weiterhin rechtwinklig zur Sollrichtung 13 der Fahrspur 14 ausgerichtet. Bei einer Achsschenkellenkung der Laufräder 5 ist also in diesem Fall keine Verstellung des Verteilergestänges zum Rahmen 3 der Feldspritze 15 erforderlich.

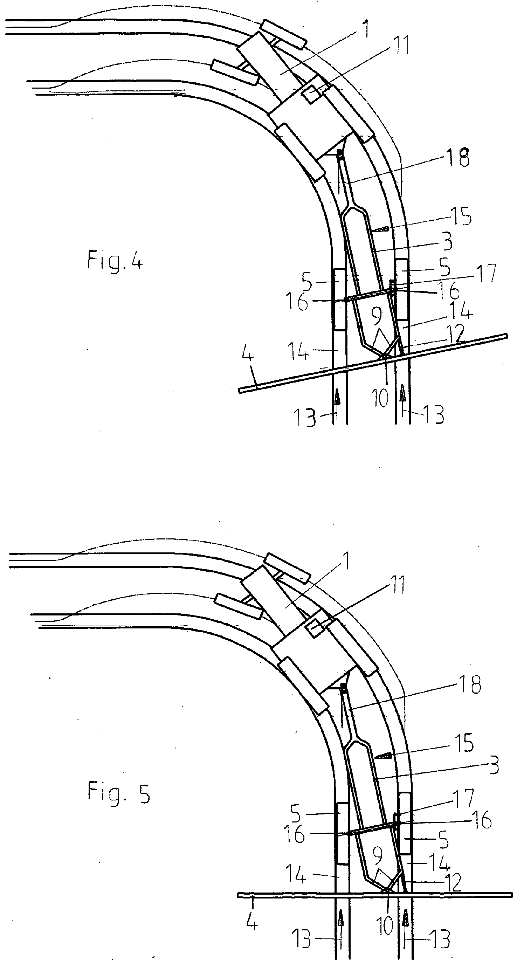

Wenn mit der in Fig. 3 beschriebenen aus Ackerschlepper 1 und Feldspritze 15 bestehenden Zugverband, wobei die Feldspritze 15 eine Achsschenkellenkung für die Laufräder 5 aufweist, eine Kurve durchfahren wird, wie Fig. 4 zeigt, sei es im Feld oder beim Wendevorgang am Feldende, werden über die Stellglieder der Achsschenkellenkung die Laufräder um die aufrechte Achse 16 der Achsschenkellenkung verschwenkt, damit die Laufräder 5 der Feldspritze 15 der Fahrspur 14 folgen. Hierbei stellt sich der Rahmen 3 der Feldspritze 15 quer zur Sollrichtung 13 der Fahrspur 14, so dass das Verteilergestänge 4 nicht mehr rechtwinklig zur Sollrichtung 13 der Fahrspur 14 ausgerichtet ist. Um das Verteilergestänge 4 rechtwinklig zur Fahrspur 14 auszurichten, wie es in Fig. 5 dargestellt ist, wird über eine Betätigungseinrichtung das zwischen dem Rahmen 3 und dem Verteilergestänge 4 angeordnete Stellglied 12 angesteuert und das Verteilergestänge 4 in die Fig. 5 dargestellte Position, in welches es rechtwinklig zur Sollrichtung 13 der Fahrspur 14 ausgerichtet ist, eingestellt. Dieses kann durch ein Betätigungselement von Hand geschehen. Es ist jedoch auch möglich, dass aufgrund das von dem Sensor 17 der Achsschenkellenkung entsprechende Signale, wie die Winkelstellung des Laufrades 5 zum Rahmen 3, an die elektronische Regeleinrichtung, der beispielsweise als Bordcomputer 11 ausgebildet ist übermittelt. Von diesem Bordcomputer 11 werden dann entsprechend berechnete Stellsignale an die Stellvorrichtung übermittelt, so dass das Stellglied 12 das Verteilergestänge 4 rechtwinklig zur Sollrichtung 13 der Fahrspur 14 ausrichtet.

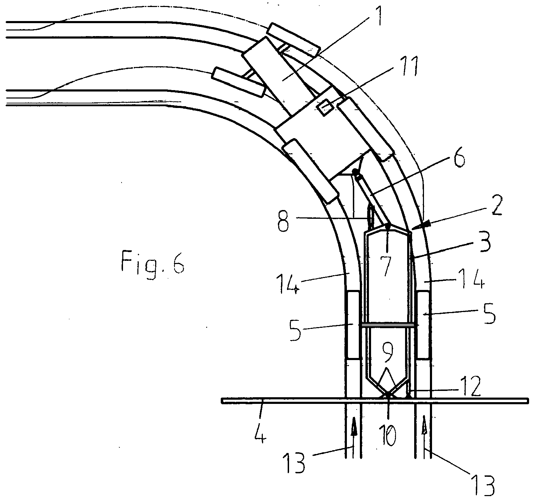

Der aus dem Schlepper 1 und der Feldspritze 2 bestehende Zugverbindung gemäß Fig. 6 anspricht dem Zugverband gemäß den Fig. 1 und 2 beim Durchfahren einer Kurve. Wenn mit der mit einer Deichsellenkung ausgestatteten Verteilmaschine 2 die Kurve im Feld oder beim Wendevorgang am Feldende durchfahren wird, wird mittels des zwischen der Deichsel 6 und dem Rahmen 3 angeordneten Stellgliedes 8 der Rahmen 3 der Verteilmaschine 2 entsprechend verstellt, damit die Laufräder 5 der Verteilmaschine 2 der Fahrspur 14 folgen. Wie die Fig. 6 zeigt, ist in diesem Fall eine Änderung der Stellung des Verteilergestänges 4 zum Rahmen 3 nicht erforderlich, weil bis zum Erreichen des Vorgewendes in diesem Falle das Verteilergestänge 4 rechtwinklig zur Sollrichtung 13 der Fahrspur 14 bleibt.

Wenn bei der Situation gemäß Fig. 6 beim Durchfahren der Kurve das Stellglied 8 zur entsprechenden Schrägstellung der Deichsel 6 gegenüber dem Rahmen 3 betätigt wird, damit die Laufräder 5 der Feldspritze 2 der Fahrspur 14 vor, werden von dem nicht dargestellten Winkelsensor, der die Winkelstellung der Deichseln 6 zwischen dem Schlepper bzw. dem Rahmen 3 ermittelt keine Stellsignale über die Regeleinrichtung 11 an das Stellglied 12 weitergeleitet, damit das Stellglied 12, welches zwischen dem Rahmen 3 und dem Verteilergestänge 4 angeordnet ist, nicht das Verteilergestänge 4 verstellt.

In der Speichereinrichtung der elektronischen Regeleinrichtung, die als Bordcomputer 11 ausgebildet ist, ist eine Feldkarte mit der Lage der Fahrgassen hinterlegt. Aufgrund des in der Speichereinrichtung des Bordcomputers 11 hinterlegten Programmes steuert der Bordcomputer 11 die Stellglieder 12 derartig an, dass das Verteilergestänge 4 vom Anfang der Ausbringbahn bis zum Ende der Ausbringbahn, also von Wendevorgang zu Wendevorgang zumindest annähernd rechtwinklig zur Sollrichtung 13 der Fahrgasse 14 ausgerichtet ist. Um ein Aufschwingen des Verteilergestänges 4 zu vermeiden, ist das Stellglied 12 mit einer Dämpfungsvorrichtung versehen.

Des weiteren ist in der Speichereinrichtung des Bordcomputers 11 ein Programm hinterlegt, mittels welchem die zwischen dem Rahmen 3 und dem Verteilergestänge 4 angeordneten Stellglieder 12 bzw. den zugeordneten Stellglieder 12 bzw. den zugeordneten Dämpfungsgliedern derart angesteuert werden, das bei Beginn der Kurvenfahrt das Gestänge 4 eine verzögerte Bewegung des Rahmens 3 mitmacht und dass am Ende der Kurvenfahrt das Verteilergestänge 4 nicht abrupt abgebremst wird, sondern die Abbremsung progressiv erfolgt. Hierbei kann der Bordcomputer 11, derart ausgelegt sein, dass das Schwingungs- und Dämpfungsverhalten des Stell- und/oder Dämpfungsgliedes 12 bzw. des Verteilergestänges 4 in der horizontalen Ebene verändert werden kann und die entsprechende Ansteuerung des Stellgliedes 12 lernfähig ist.

Das Mittel 12 kann derart ausgebildet sein, dass das Gestänge 4 am Feldende die sich aus der Achsschenkellenkung ergebende Schrägstellung des Gestänges 4 kompensiert und in die Geradestellung zurückführt und die Pendelung erst nach dem Abschluss der Kurvenfahrt erst wieder frei gibt. In dem Bordcomputer 11 kann ein Programm hinterlegt sein, dass bei Geradeausfahrt die horizontalen Gestängebewegungen registriert werden und diesen durch eine entsprechende Ansteuerung des Stellgliedes 12 entgegengewirkt wird.

Um ein optimales Schwingungsverhalten des Verteilergestänges 4 beim Wendevorgang zu erreichen, ist der Bordcomputer 11 derart ausgelegt, dass das Stellglied 12 derart angesteuert ist, dass das Dämpfungselement bei Einleitung des Wendevorganges aktiviert und nach Beendigung des Wendevorganges deaktiviert wird. Hierbei kann das Dämpfungselement beispielsweise als Bremselement ausgebildet sein.

## Patentansprüche

1. Landwirtschaftliche Verteilmaschine mit einem Rahmen, auf dem Rahmen angeordneten Vorratsbehälter und einem an dem Rahmen mittels einer Aufhängevorrichtung angeordneten Verteilergestänge, welches um eine aufrechte Achse gegenüber dem Rahmen verschwenkbar aufgehängt ist, wobei zwischen dem Rahmen und dem Verteilergestänge zumindest eine von einer elektronischen Regeleinrichtung ansteuerbares motorisches Stellglied zum Verstellen des Verteilergestänges um die aufrechte Achse vorgesehen ist,
**dadurch gekennzeichnet,**
**dass** Mittel vorhanden sind, mittels denen das Verteilergestänge (4) mittels des Stellgliedes (12) rechtwinklig zur Sollrichtung (13) der Fahrspur (14) der Verteilmaschine (2, 15) ausgerichtet wird, wenn sich die Verteilmaschine (2, 15) in einem Winkel zur Sollrichtung (13) der Fahrspur (14) eingestellt hat.

2. Verteilmaschine nach Anspruch 1, **dadurch gekennzeichnet, dass** das Mittel als manuell betätigbarer Schalter ausgebildet ist.

3. Verteilmaschine nach Anspruch 1, **dadurch gekennzeichnet, dass** das Mittels als Winkelsensor (17) ausgebildet ist.

4. Verteilmaschine nach Anspruch 3, **dadurch gekennzeichnet, dass** der Verteilmaschine (15) gegenüber dem Rahmen lenkbare Laufräder (5) zugeordnet sind, dass das Mittel zur Ansteuerung des Stellgliedes der Winkelsensor (17) ist, dass der Winkelsensor (17) Signale an die elektronische Regeleinrichtung (11) übermittelt.

5. Verteilmaschine nach Anspruch 3, **dadurch gekennzeichnet dass** die Verteilmaschine ein Fahrwerk und eine Zugdeichsel (6) aufweist, dass die Zugdeichsel (6) mittels eines eine aufrechte Achse aufweisenden Gelenkes (7) am Rahmen (3) angelenkt und zwischen der Zugdeichsel (6) und dem Rahmen (3) eine motorisches Stellorgan (8) angeordnet ist, dass zwischen der Deichsel (6) und des die Verteilmaschine (2) ziehenden Schleppers (1) zumindest ein Winkelsensor angeordnet ist, dass das Mittel zur Ansteuerung des Stellgliedes (12) der Winkelsensor ist, dass der Winkelsensor Signale an die elektronische Regeleinrichtung (11) übermittelt.

6. Verteilmaschine nach Anspruch 2 und 4 oder 5, **dadurch gekennzeichnet, dass** bei Betätigung des manuellen Schalters keine Stellsignale von dem Winkelsensor (17) an die Regeleinrichtung (11) und/oder Stellglied (12) weitergeleitet werden.

7. Verteilmaschine nach Anspruch 1, **dadurch gekennzeichnet, dass** in der Speichereinrichtung der elektronischen Regeleinrichtung (11) eine Feldkarte mit der Lage der Fahrgassen hinterlegt ist, dass aufgrund eines in der Speichereinrichtung hinterlegten Programms die Regeleinrichtung die Stellglieder (12) derart ansteuert, dass das Verteilergestänge (4) vom Anfang der Ausbringbahn bis zum Ende der Ausbringbahn zumindest annähernd rechtwinklig zur Richtung (13) der Fahrgasse (14) ausgerichtet ist.

8. Verteilmaschine nach einem oder mehreren der vorstehenden Ansprüche, **dadurch gekennzeichnet, dass** das Stellglied (12) mit einer Dämpfungsvorrichtung versehen ist.

9. Verteilmaschine nach einem oder mehreren der vorstehenden Ansprüche, **dadurch gekennzeichnet, dass** in der Speichereinrichtung der Regeleinrichtung (11) ein Programm hinterlegt ist, mittels welchem die zwischen dem Rahmen (3) und dem Verteilergestänge (4) angeordneten Stellglieder (12) und/oder Dämpfungsglieder derart angesteuert werden, dass bei Beginn einer Kurvenfahrt das Gestänge (4) verzögert die Bewegung des Rahmens (3) mitmacht, und dass am Ende der Kurvenfahrt das Verteilergestänge (4) nicht abrupt abgebremst wird, sondern die Abbremsung progressiv erfolgt.

10. Verteilmaschine nach einem oder mehreren der vorstehenden Ansprüche, **dadurch gekennzeichnet, dass** das Schwingungs- und Dämpfungsverhalten in der horizontalen Ebene verändert werden kann und die entsprechende Ansteuerung "lernfähig" ist.

11. Verteilmaschine nach einem oder mehreren der vorstehenden Ansprüche, **dadurch gekennzeichnet, dass** Mittel vorhanden sind, die das Gestänge (4) am Feldende die sich aus der Achsschenkellenkung ergebenen Schrägstellung des Gestänges (4) kompensieren, zurückführen in die gerade Stellung und die Pendelung erst nach dem Abschluss der Kurvenfahrt wieder freigeben.

12. Verteilmaschine nach einem oder mehreren der vorstehenden Ansprüche, **dadurch gekennzeichnet, dass** bei der Geradeausfahrt die horizontalen Gestängebewegungen registrieren werden und diesen regeltechnischen entgegengewirkt wird.

## Claims

1. Agricultural distribution machine having a frame, reservoir containers arranged on the frame, and a distributor linkage which is arranged on the frame by means of a suspension device, which distributor linkage is suspended so as to be pivotable with respect to the frame about an upright axis, wherein at least one motor-operated actuator element, which can be actuated by an electronic control device and which for the purpose of adjusting the distributor linkage about the upright axis is provided between the frame and the distributor linkage,
**characterized**
**in that** means are provided by means of which the distributor linkage (4) is oriented by means of the actuator element (12) at a right angle to the setpoint direction (13) of the driving lane (14) of the distribution machine (2, 15), if the distribution machine (2, 15) has been set at an angle with respect to the setpoint direction (13) of the driving lane (14).

2. Distribution machine according to Claim 1, **characterized in that** the means are embodied as a switch which can be actuated manually.

3. Distribution machine according to Claim 1, **characterized in that** the means is embodied as an angle sensor (17).

4. Distribution machine according to Claim 3, **characterized in that** running wheels (5) which can be steered with respect to the frame are assigned to the distribution machine (15), **in that** the means for actuating the actuator element is the angle sensor (17), and **in that** the angle sensor (17) transmits signals to the electronic control device (11).

5. Distribution machine according to Claim 3, **characterized in that** the distribution machine has a chassis and a drawbar (6), **in that** the drawbar (6) is coupled in an articulated fashion to the frame (3) by means of a joint (7) which has an upright axis, and a motor-operated actuator element (8) is arranged between the drawbar (6) and the frame (3), **in that** at least one angle sensor is arranged between the drawbar (6) and the tractor (1) which tows the distribution machine (2), **in that** the means for actuating the actuator element (12) is the angle sensor, and **in that** the angle sensor transmits signals to the electronic control device (11).

6. Distribution machine according to Claims 2 and 4 or 5, **characterized in that** when the manual switch is actuated, actuation signals are not passed on from the angle sensor (17) to the control device (11) and/or actuator element (12).

7. Distribution machine according to Claim 1, **characterized in that** a field map with the position of the driving lanes is stored in the memory device of the electronic control device (11), **in that** the control device actuates the actuator elements (12) on the basis of a program stored in the memory device, in such a way that the distributor linkage (4) is oriented at least approximately at a right angle to the direction (13) of the driving lane (14), from the start of the discharge path to the end of the discharge path.

8. Distribution machine according to one or more of the preceding claims, **characterized in that** the actuator element (12) is provided with a damping device.

9. Distribution machine according to one or more of the preceding claims, **characterized in that** a program by means of which the actuator elements (12) arranged between the frame (3) and the distribution linkage (4) and/or damping elements are actuated in such a way that when cornering starts, the linkage (4) follows the movement of the frame (3) with a delay, is stored in the memory device of the control device (11), and **in that** at the end of the cornering the distributor linkage (4) is not braked abruptly but instead the braking takes place progressively.

10. Distribution machine according to one or more of the preceding claims, **characterized in that** the vibration and damping area in the horizontal plane can be changed and the corresponding actuation is "trainable".

11. Distribution machine according to one or more of the preceding claims, **characterized in that** means are present which at the end of the field compensate the oblique position of the linkage (4) resulting from the stop axle steering and return it to the upright position, and release the oscillation again only after the termination of the cornering.

12. Distribution machine according to one or more of the preceding claims, **characterized in that** in the case of straight-ahead travel the horizontal linkage movements are registered and counteracted by control means.

## Revendications

1. Épandeur agricole comprenant un châssis, un réservoir disposé sur le châssis et une tringlerie d'épandage disposée sur le châssis au moyen d'un dispositif d'attelage, qui est attelée de manière à pouvoir pivoter autour d'un axe vertical par rapport au châssis, au moins un organe de commande motorisé pouvant être commandé par un dispositif de réglage électronique étant prévu entre le châssis et la tringlerie d'épandage pour déplacer la tringlerie d'épandage autour de l'axe vertical, **caractérisé en ce que**
des moyens sont prévus, au moyen desquels la tringlerie d'épandage (4) est orientée au moyen de l'organe de commande (12) à angle droit par rapport à la direction de consigne (13) de la trajectoire de déplacement (14) de l'épandeur (2, 15) lorsque l'épandeur (2, 15) s'est ajusté suivant un angle par rapport à la direction de consigne (13) de la trajectoire de déplacement (14).

2. Épandeur selon la revendication 1, **caractérisé en ce que** le moyen est réalisé sous forme de commutateur à commande manuelle.

3. Épandeur selon la revendication 1, **caractérisé en ce que** le moyen est réalisé sous forme de capteur angulaire (17).

4. Épandeur selon la revendication 3, **caractérisé en ce que** des roues de roulement (5) pouvant être dirigées par rapport au châssis sont associées à l'épandeur (15), **en ce que** le moyen pour commander l'organe de commande est le capteur angulaire (17), **en ce que** le capteur angulaire (17) transmet des signaux au dispositif de réglage électronique (11).

5. Épandeur selon la revendication 3, **caractérisé en ce que** l'épandeur présente un train de roulement et un timon de traction (6), **en ce que** le timon de traction (6) est articulé au châssis (3) au moyen d'une articulation (7) présentant un axe vertical et un organe de commande motorisé (8) est disposé entre le timon de traction (6) et le châssis (3), **en ce qu'**entre le timon (6) et le tracteur (1) tirant l'épandeur (2) est disposé au moins un capteur angulaire, **en ce que** le moyen de commande de l'organe de commande (12) est le capteur angulaire, **en ce que** le capteur angulaire transmet des signaux au dispositif de réglage électronique (11).

6. Épandeur selon les revendications 2 et 4 ou 5, **caractérisé en ce que** lors de l'actionnement du commutateur manuel, aucun signal de commande n'est transmis du capteur angulaire (17) au dispositif de réglage (11) et/ou à l'organe de commande (12).

7. Épandeur selon la revendication 1, **caractérisé en ce qu'**une carte de champ avec la position des voies de passage est consignée dans le dispositif de mémoire du dispositif de réglage électronique (11), **en ce que** le dispositif de réglage commande les organes de commande (12) sur la base d'un programme consigné dans le dispositif de mémoire, de telle sorte que la tringlerie d'épandage (4) soit orientée du début de la voie d'épandage jusqu'à la fin de la voie d'épandage au moins approximativement à angle droit par rapport à la direction (13) de la voie de passage (14).

8. Épandeur selon l'une quelconque ou plusieurs des revendications précédentes, **caractérisé en ce que** l'organe de commande (12) est pourvu d'un dispositif d'amortissement.

9. Épandeur selon l'une quelconque ou plusieurs des revendications précédentes, **caractérisé en ce qu'**un programme est consigné dans le dispositif de mémoire du dispositif de réglage (11), au moyen duquel les organes de commande (12) et/ou les organes d'amortissement disposés entre le châssis (3) et la tringlerie d'épandage (4) sont commandés de telle sorte qu'au début d'une conduite en virage, la tringlerie (4) participe au mouvement du châssis (3) de manière ralentie et qu'à la fin de la conduite en virage, la tringlerie d'épandage (4) ne soit pas freinée brusquement mais que le freinage s'effectue progressivement.

10. Épandeur selon l'une quelconque ou plusieurs des revendications précédentes, **caractérisé en ce que** le comportement d'oscillation et d'amortissement dans le plan horizontal peut être modifié et la commande correspondante est "capable d'apprendre".

11. Épandeur selon l'une quelconque ou plusieurs des revendications précédentes, **caractérisé en ce que** des moyens sont prévus, lesquels, en compensent l'extrémité du champ la position oblique de la tringlerie (4) résultant de la direction des fusées d'essieu, ramènent la tringlerie (4) dans la position droite à et rétablissent le mouvement de pendule seulement à l'achèvement de la conduite en virage.

12. Épandeur selon l'une quelconque ou plusieurs des revendications précédentes, **caractérisé en ce que** dans le cas d'une conduite en ligne droite, les mouvements horizontaux de la tringlerie sont enregistrés et contrés par une technique de réglage.
